(19) Europäisches Patentamt
European Patent Office
Office européen des brevets

(11) **EP 4 336 163 A1**

(12) **EUROPEAN PATENT APPLICATION**

(43) Date of publication:
**13.03.2024 Bulletin 2024/11**

(21) Application number: **23195768.9**

(22) Date of filing: **06.09.2023**

(51) International Patent Classification (IPC):
**G01M 5/00** *(2006.01)*     **G06F 30/23** *(2020.01)*
*G06F 119/04 (2020.01)*     *G06F 111/08 (2020.01)*
*G06F 113/26 (2020.01)*

(52) Cooperative Patent Classification (CPC):
**G01M 5/0033; G06F 30/23;** G06F 2111/08;
G06F 2119/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.09.2022 IN 202221051300**

(71) Applicant: **Tata Consultancy Services Limited
Maharashtra (IN)**

(72) Inventors:
• **MAITI, SOUMYADIPTA**
**411013 Pune - Maharashtra (IN)**
• **RAI, BEENA**
**411013 Pune - Maharashtra (IN)**
• **KAUSLEY, SHANKAR BALAJIRAO**
**411013 Pune - Maharashtra (IN)**
• **SAINI, PARVESH**
**411013 Pune - Maharashtra (IN)**
• **BHATTACHARJEE, SURYADIP**
**411013 Pune - Maharashtra (IN)**
• **DHRANGDHARIYA, PRIYANKKUMAR
DHIRAJLAL**
**411013 Pune - Maharashtra (IN)**

(74) Representative: **Goddar, Heinz J.
Boehmert & Boehmert
Anwaltspartnerschaft mbB
Pettenkoferstrasse 22
80336 München (DE)**

(54) **SYSTEMS AND METHODS FOR SIMULATING TOPOGRAPHY STRUCTURES OF COATING MATERIALS AND GENERATING ANALYSIS REPORT THEREOF**

(57)    Most techniques to estimate the service life of coatings are experimental in nature, cost expensive and are computationally heavy. Present disclosure provides systems and methods that predict the combined effects of crack path propagation and zones of delamination, that form on coating material and its surface due to weathering. The system of the present disclosure implemented a combined Finite Element Method (FEM) and Monte Carlo based simulation approach to capture the effects of delamination and crack propagation, respectively (202, 204, 206, 208). The crack paths are predicted using a probabilistic model, considering crack propagation, branching, and keeping a record of crack age. Stress distribution computations are performed using FEM to understand stress concentration zones and delamination behavior with time, which is methodically also combined with the time sequence of cracking as well.

obtaining a plurality of inputs pertaining to a coating material being applied on a substrate ⟞ 202

determining one or more crack channel paths, one or more crack branching regions, and one or more crack delamination outputs associated with the coating material based on the plurality of inputs ⟞ 204

generating a topography structure of the coating material based on the one or more crack channel paths, the one or more crack branching regions, and the one or more crack delamination outputs ⟞ 206

simulating the topography structure of the coating material to obtain a simulated topography output comprising an analysis report of the coating material ⟞ 208

**FIG. 2**

**Description**

CROSS-REFERENCE TO RELATED APPLICATIONS AND PRIORITY

The present application claims priority to Indian application no. 202221051300, filed on September 8, 2022.

TECHNICAL FIELD

The disclosure herein generally relates to simulating techniques, and, more particularly, to systems and methods for simulating topography structures of coating materials and generating analysis report thereof.

BACKGROUND

Coating materials (often known as coatings) such as paints offer dual benefits of aesthetics and protection of a substrate from the outside damaging elements. A key part of coating formulation is to predict and maximize its service life. Currently, coating development and testing is a very costly and time-consuming process in the industry. Usually newly developed coating is kept under natural sunshine for more than 5 years to examine the gradual effects of weathering. A physics-based model to predict the weathering of coatings reduces the dependence on experimental techniques to do the same, which leads to a drastic reduction in time from years to days/hours as it eliminates the experimental testing to check the coating degradation under the effect of weathering. Reduction of the need for experiments further lead to reduction in costs as the experiments are destructive in nature. Most techniques to estimate the service life of coatings are experimental in nature. Experimental testing of coatings is expensive, destructive in nature and time consuming (minimum 5 years under natural conditions and 48 hours under accelerated conditions). The only existing model for prediction of physical properties is a pre-existing Monte Carlo model (Hinderliter and Croll, 2005). However, such an approach or model can only be used to model the change in surface roughness (and few related properties) due to weathering. Simulation of crack propagation using first-principle physics-based calculations is computationally expensive both in terms of resources and time.

SUMMARY

Embodiments of the present disclosure present technological improvements as solutions to one or more of the above-mentioned technical problems recognized by the inventors in conventional systems.
For example, in one aspect, there is provided a processor implemented method for simulating topography structures of coating materials and generating analysis report. The method comprises obtaining, via one or more hardware processors, a plurality of inputs pertaining to a coating material being applied on a substrate; determining, via the one or more hardware processors, one or more crack channel paths, one or more crack branching regions, and one or more crack delamination outputs associated with the coating material based on the plurality of inputs; generating a topography structure of the coating material based on the one or more crack channel paths, the one or more crack branching regions, and the one or more crack delamination outputs; and simulating the topography structure of the coating material to obtain a simulated topography output comprising an analysis report of the coating material.
In an embodiment, the plurality of inputs comprises one or more of (i) one or more positions and one or more line directions of one or more microcrack seeds in the coating material, (ii) a weathering intensity, (iii) a dynamic material cracking and delamination energy, and (iv) one or more stress types at one or more parts of the coating material.
In an embodiment, the one or more crack channel paths comprise (i) one or more positions associated with one or more active crack tips, (ii) a statistical distribution of one or more crack deviations, and (iii) a crack growth rate.
In an embodiment, the one or more crack branching regions comprise a rate of crack branching occurrence, and a statistical distribution of one or more angles of crack branching.
In an embodiment, the one or more crack delamination outputs comprise at least one of (i) a statistical distribution of stress across the coating material, (ii) a delaminated profile indicative of a shape and a curvature of the coating material when delaminated from the substrate, (iii) speed and time of a delamination associated with the coating material, and (iv) one or more boundary conditions of at least one of a stress and a strain in the coating material.
In an embodiment, the one or more crack channel paths are determined based on one or more crack tips identified using (i) the one or more active crack tips, (ii) the statistical distribution of the one or more crack deviations, (iii) the crack growth rate, and (iv) the one or more crack branching regions, and (v) a vicinity of the one or more crack tips with reference to one or more edges and one or more crack lines.
In an embodiment, the one or more crack branching regions are identified based on a comparison of a deflection of one or more angles of the crack branching with a pre-defined angle.
In an embodiment, the analysis report of the coating material comprises one or more of (i) a degree of damage of the coating material due to weathering, (ii) a remaining useful life (RUL) of the coating material, (ii) an intermediate stage and one or more past stages of one or more physical properties of the coating material.

In another aspect, there is provided a processor implemented system for simulating topography structures of coating materials and generating analysis report. The system comprises: a memory storing instructions; one or more communication interfaces; and one or more hardware processors coupled to the memory via the one or more communication interfaces, wherein the one or more hardware processors are configured by the instructions to: obtain a plurality of inputs pertaining to a coating material being applied on a substrate; determine one or more crack channel paths, one or more crack branching regions, and one or more crack delamination outputs associated with the coating material based on the plurality of inputs; generate a topography structure of the coating material based on the one or more crack channel paths, the one or more crack branching regions, and the one or more crack delamination outputs; and simulate the topography structure of the coating material to obtain a simulated topography output comprising an analysis report of the coating material.

In an embodiment, the plurality of inputs comprises one or more of (i) one or more positions and one or more line directions of one or more microcrack seeds in the coating material, (ii) a weathering intensity, (iii) a dynamic material cracking and delamination energy, and (iv) one or more stress types at one or more parts of the coating material.

In an embodiment, the one or more crack channel paths comprise (i) one or more positions associated with one or more active crack tips, (ii) a statistical distribution of one or more crack deviations, and (iii) a crack growth rate.

In an embodiment, the one or more crack branching regions comprise a rate of crack branching occurrence, and a statistical distribution of one or more angles of crack branching.

In an embodiment, the one or more crack delamination outputs comprise at least one of (i) a statistical distribution of stress across the coating material, (ii) a delaminated profile indicative of a shape and a curvature of the coating material when delaminated from the substrate, (iii) speed and time of a delamination associated with the coating material, and (iv) one or more boundary conditions of at least one of a stress and a strain in the coating material.

In an embodiment, the one or more crack channel paths are determined based on one or more crack tips identified using (i) the one or more active crack tips, (ii) the statistical distribution of the one or more crack deviations, (iii) the crack growth rate, and (iv) the one or more crack branching regions, and (v) a vicinity of the one or more crack tips with reference to one or more edges and one or more crack lines.

In an embodiment, the one or more crack branching regions are identified based on a comparison of a deflection of one or more angles of the crack branching with a pre-defined angle.

In an embodiment, the analysis report of the coating material comprises one or more of (i) a degree of damage of the coating material due to weathering, (ii) a remaining useful life (RUL) of the coating material, (ii) an intermediate stage and one or more past stages of one or more physical properties of the coating material.

In yet another aspect, there are provided one or more non-transitory machine-readable information storage mediums comprising one or more instructions which when executed by one or more hardware processors cause simulating topography structures of coating materials and generating analysis report by obtaining a plurality of inputs pertaining to a coating material being applied on a substrate; determining one or more crack channel paths, one or more crack branching regions, and one or more crack delamination outputs associated with the coating material based on the plurality of inputs; generating a topography structure of the coating material based on the one or more crack channel paths, the one or more crack branching regions, and the one or more crack delamination outputs; and simulating the topography structure of the coating material to obtain a simulated topography output comprising an analysis report of the coating material.

In an embodiment, the plurality of inputs comprises one or more of (i) one or more positions and one or more line directions of one or more microcrack seeds in the coating material, (ii) a weathering intensity, (iii) a dynamic material cracking and delamination energy, and (iv) one or more stress types at one or more parts of the coating material.

In an embodiment, the one or more crack channel paths comprise (i) one or more positions associated with one or more active crack tips, (ii) a statistical distribution of one or more crack deviations, and (iii) a crack growth rate.

In an embodiment, the one or more crack branching regions comprise a rate of crack branching occurrence, and a statistical distribution of one or more angles of crack branching.

In an embodiment, the one or more crack delamination outputs comprise at least one of (i) a statistical distribution of stress across the coating material, (ii) a delaminated profile indicative of a shape and a curvature of the coating material when delaminated from the substrate, (iii) speed and time of a delamination associated with the coating material, and (iv) one or more boundary conditions of at least one of a stress and a strain in the coating material.

In an embodiment, the one or more crack channel paths are determined based on one or more crack tips identified using (i) the one or more active crack tips, (ii) the statistical distribution of the one or more crack deviations, (iii) the crack growth rate, and (iv) the one or more crack branching regions, and (v) a vicinity of the one or more crack tips with reference to one or more edges and one or more crack lines.

In an embodiment, the one or more crack branching regions are identified based on a comparison of a deflection of one or more angles of the crack branching with a pre-defined angle.

In an embodiment, the analysis report of the coating material comprises one or more of (i) a degree of damage of the coating material due to weathering, (ii) a remaining useful life (RUL) of the coating material, (ii) an intermediate stage and one or more past stages of one or more physical properties of the coating material.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system for simulating topography structures of coating materials and generating analysis report, in accordance with an embodiment of the present disclosure.

FIG. 2 depicts an exemplary flow chart illustrating a method for simulating topography structures of coating materials and generating analysis report, using the system of FIG. 1, in accordance with an embodiment of the present disclosure.

FIG. 3 depicts variation in coating thickness due to occurrence of one or more degradation events, in accordance with an embodiment of the present disclosure.

FIG. 4 depicts evolution of surface roughness with one or more degradation events, in accordance with an embodiment of the present disclosure.

FIG. 5 depicts clearcoat surface roughness topography due to weathering, in accordance with an embodiment of the present disclosure.

FIG. 6 depicts a real instance of cracking of the coating material (e.g., paint), in accordance with an embodiment of the present disclosure.

FIG. 7 depicts one or more crack lines extracted from the coating material (e.g., paint), in accordance with an embodiment of the present disclosure.

FIG. 8A depicts a simulation result for crack propagation after 2,000 steps, in accordance with an embodiment of the present disclosure.

FIG. 8B depicts a simulation result for crack propagation after 4,000 steps, in accordance with an embodiment of the present disclosure.

FIG. 8C depicts a simulation result for crack propagation after 6,000 steps, in accordance with an embodiment of the present disclosure.

FIG. 8D depicts a simulation result for crack propagation after 8,000 steps, in accordance with an embodiment of the present disclosure.

FIG. 8E depicts a simulation result for crack propagation after 10,000 steps, in accordance with an embodiment of the present disclosure.

FIG. 8F depicts a simulation result for crack propagation after 12,000 steps, in accordance with an embodiment of the present disclosure.

FIG. 8G depicts a simulation result for crack propagation after 16,000 steps, in accordance with an embodiment of the present disclosure.

FIG. 9 depicts delamination finite element method (FEM) model dimensions and boundary conditions (serving as delamination outputs), in accordance with an embodiment of the present disclosure.

FIG. 10 depicts meshing of a model and a pre-meshed crack, in accordance with an embodiment of the present disclosure.

FIG. 11 depicts applied pressure conditions at a substrate, in accordance with an embodiment of the present disclosure.

FIG. 12 depicts a distribution of induced normal ($\sigma_x$) in the coating material, in accordance with an embodiment of the present disclosure.

FIG. 13 depicts a graphical representation illustrating a variation in energy release rate and normal stress with increment in applied pressure, in accordance with an embodiment of the present disclosure.

FIG. 14 depicts nodes of the coating material selected for extracting delaminated profile, in accordance with an embodiment of the present disclosure.

FIG. 15 depicts a graphical representation illustrating a delaminated profile with different holding time (0-200 Sec), in accordance with an embodiment of the present disclosure.

FIG. 16 depicts delamination growth and Von mises stress distribution at different holding time, in accordance with an embodiment of the present disclosure.

FIG. 17 depicts a delamination topography map, in accordance with an embodiment of the present disclosure.

FIG. 18 depicts simulated crack lines comprised in the simulated topography output, in accordance with an embodiment of the present disclosure.

FIG. 19 depicts a superimposed topography map of both delamination and cracking, in accordance with an embodiment of the present disclosure.

FIGS. 20A-20B depict a comparison of real topography due to combined effect of delamination and cracking with that of the simulated topography output of FIG. 2, in accordance with an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Most conventional techniques to estimate the service life of coatings are experimental in nature, cost expensive and are computationally heavy. Present disclosure provides systems and methods that predict the combined effects of crack path propagation and zones of delamination, that form on coating material and its surface due to weathering. The system of the present disclosure implements a combined Finite Element Method (FEM) and Monte Carlo based simulation approach to capture the effects of delamination and crack propagation, respectively. The crack paths are predicted using a probabilistic model, considering crack propagation, branching, and keeping a record of crack age. Stress distribution computations are performed using FEM to understand stress concentration zones and delamination behavior with time, which is methodically also combined with the time sequence of cracking as well. More specifically, crack propagation of the coating material is modelled as a probabilistic system (e.g., system of the present disclosure) by using statistical distribution of angles of deviation of the crack channel paths. Crack branching is implemented depending on the angle of deviation of the crack. A counter (comprised in memory of the system) has been implemented by the system of the present disclosure to keep record of crack age. Delamination profile has been determined using one or more simulation techniques (e.g., virtual crack closure technique (VCCT) based finite element modelling (FEM) techniques). The failure criterion is used for delamination is the critical fracture energy release rate of interface debonding. Time series-based FEM data and delamination profile have been combined with Monte Carlo crack propagation technique and the final coating surface topography (e.g., paint surface topography) has been generated (e.g., also referred as simulated topography output).

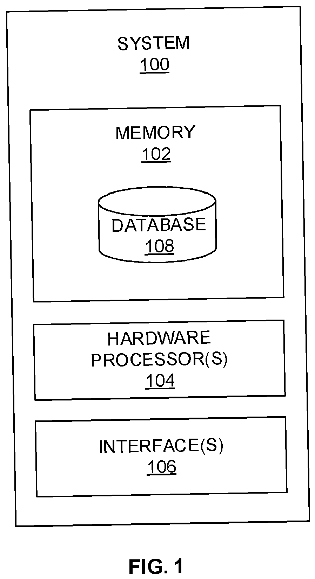

Referring now to the drawings, and more particularly to FIGS. 1 through 20B, where similar reference characters denote corresponding features consistently throughout the figures, there are shown preferred embodiments and these embodiments are described in the context of the following exemplary system and/or method.

FIG. 1 depicts an exemplary system 100 for simulating topography structures of coating materials and generating analysis report, in accordance with an embodiment of the present disclosure. In an embodiment, the system 100 may also be referred as simulation system or simulating system and interchangeably used herein. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information associated with various coating materials, and substrates on which the coating materials are applied. The database 108 further comprises various simulation techniques such as contact debonding, Cohesive Zone Modeling (CZM) and Interfacial delamination using Virtual Crack Closure Techniques (VCCT), Finite Element Analysis/Method (FEA/FEM), and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

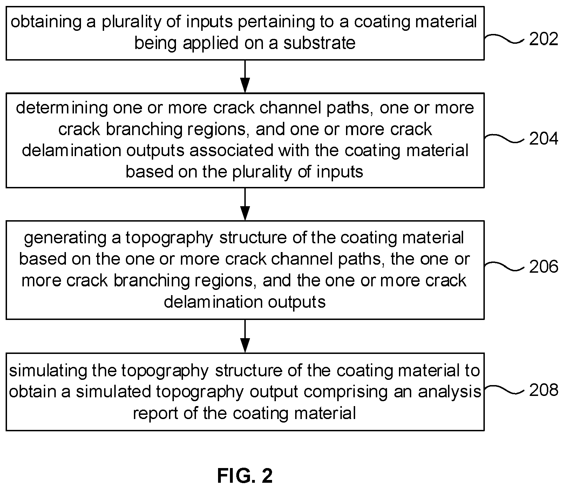

FIG. 2 depicts an exemplary flow chart illustrating a method for simulating topography structures of coating materials and generating analysis report, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, and the flow diagram as depicted in FIG. 2.

At step 202 of the method of the present disclosure, the one or more hardware processors 104 obtain a plurality of inputs pertaining to a coating material being applied on a substrate. For example, the coating material is paints as described/discussed by the present disclosure. It is to be understood by a person having ordinary skill in the art or person skilled in the art such examples of coating material (e.g., paints) shall not be construed as limiting the scope of the present disclosure. Other coating materials may include but are not limited to, (i) coatings for scratch resistant surfaces, wherein the main base material for paint could be polyurethanes or other resin-based chemicals, (ii) solvents that are needed for spraying the paints on surfaces, and the like. Referring to step 202, the plurality of inputs comprises one or more of (i) one or more positions and one or more line directions of one or more microcrack seeds in the coating material, (ii) a weathering intensity, (iii) a dynamic material cracking and delamination energy, (iv) one or more stress types at one or more parts of the coating material, or combinations thereof. The expression 'coating material' may also be referred as 'coating', 'coatings', 'material' and interchangeably used herein.

Coating materials such as paints serve multiple purposes such as aesthetic enhancement, protection of the substrate from external elements, and the like. Coating materials are generally applied in the following three stages with slight variations depending on type of substrate and uses.

1. Primer for leveling the surface defects making it easier for the coating materials to stick to it
2. Basecoat containing pigments responsible for colour (or color) effects, can be solid, metallic, or pearlescent
3. Clear coat as applied over the basecoat, that is responsible for gloss and protection

The basecoat and clear coat together make the topcoat in many coatings. Effects of different environment elements such as Ultraviolet (UV), moisture, temperature are mostly felt by the topcoat and within the topcoat, it is the clear coat which mostly faces the brunt of the environmental elements. Therefore, the clear coat is most susceptible to weathering. The clear coat mainly consists of the following: (i) liquid that can be organic or aqueous for solvent-borne and water-borne clear coats, respectively, (ii) binder (e.g., the resin) that binds the components, (iii) photo initiators to aid in curing of the clear coat on exposure to actinic radiation, (iv) UV absorbers (UVAs), chemicals that absorb UV radiation to protect the coat against photo-degradation, (v) Hindered-amine Light Stabilizers (HALS), which are free radical scavengers that protects the coat from degradation, (vi) reactive diluents that aid in curing of the paint as well - (Optional), (vii) effect pigments e.g., glass flakes for additional gloss - (Optional), and the like.

Clear coats, such as paints, can be 1K (single component) or 2K (double component) coating. 1K coatings do not require a hardener, catalyst, or activator whereas a 2K coating needs to be mixed with hardener, catalyst, or activator for curing. Curing of paints is the drying and hardening of paints after its application on the substrate. Curing of paints can be achieved thermally and/or through exposure to actinic radiation (mainly UV radiation).

Despite the presence of UVA and HALS, the clear coat, on continuous exposure to weathering conditions, undergoes photo-degradation which leads to decrease in glossiness and increase in discoloration (yellowing), thereby lowering the aesthetic value of the substrate (e.g., say automotive). Among the above listed constituents, mostly photo-degradation of the binder leads to yellowing and gloss loss. Continuous weathering leads to decrease in mechanical failure of the paints, which starts to crack and then eventually delaminate. Existing approaches are prone to error in terms of predicting combined cracking and delamination behavior of coating materials under weathering.

Other inputs associated with the coating material, include but are not limited to thickness and roughness, weathering, and the like. The above inputs are better understood by way of following description:

Thickness and Roughness: Photon flux from solar spectrum is responsible for an initiator of scission of polymer chains present in paints or coating materials. The initial scission reaction sets of a complex chain of chemical reactions that eventually lead to oxidation of the polymer coating and results in mass loss of the coating due to evaporation of volatiles and loss of small fragments of the polymer chain to the environment. The erosion of the polymer surface leads to the formation of a rougher surface topography, which also causes significant alterations to macroscopic properties (like gloss, fracture toughness, etc.) of the coating. A very small percentage of the incident photons are directly responsible for degradation of the surface. Hence, a Monte Carlo approach was implemented by the system and method of the present disclosure to model the changes in topography due to repeated applications of numerous small random events.

Each event has an assignable probability of occurrence. This technique can be used in a generalized approach to generate a surface topography of paints and other coating material not only due to the effect of solar flux and Ultraviolet (UV) radiation but also due to any other random events such as rain, wind and other factors. The material is divided into small grids and all the grid points are initially occupied by the coating material. There is a certain grid material removal probability, $p$, that acts by an incident photon. The grid point at which the attempt is made for material removal is chosen randomly, in an embodiment of the present disclosure. The surface adjacent to an eroded region can be softened (more sensitive) or hardened (less sensitive) by adjusting the value of $p$.

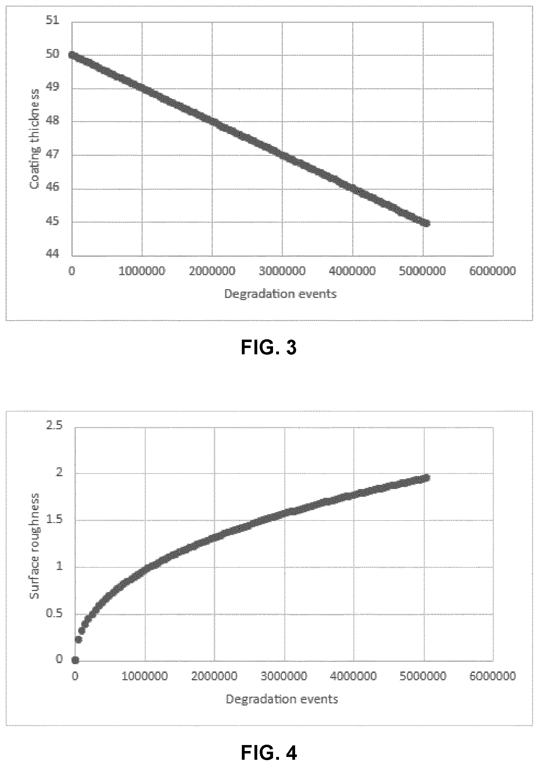

A 1000x1000x50 (surface area is 1000x1000 square units with 50 units depth) lattice was used along with an initial damage probability value of $p = 0.4$ and it was adjusted for increased sensitivity by increasing this value by 'x%' (e.g., value of x=10% in the experiments conducted by the present disclosure) per damaged neighbor. This resulted in the formation of rough surface, i.e., the coating heights varied across the surface due to uneven degradation caused by numerous random events. Thus, starting from an initial height of 50 lattice units, the thickness of the coating should decrease as material gets removed randomly from the surface. FIG. 3 shows the variation in coating thickness as degradation progressed. More specifically, FIG. 3, with reference to FIGS. 1 through 2, depicts variation in coating thickness due to occurrence of one or more degradation events, in accordance with an embodiment of the present disclosure. Coating thickness is derived by an average of coating heights across the entire domain, in an embodiment of the present disclosure.

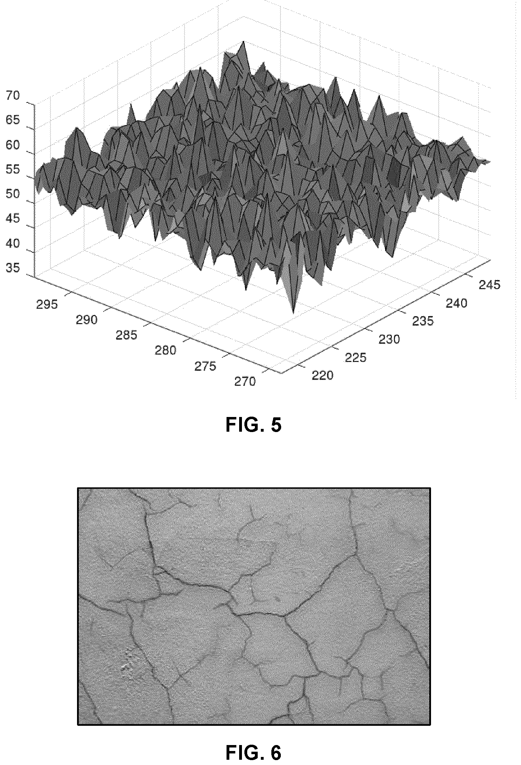

As the degradation occurs, the surface of the coating becomes uneven and rougher. The standard deviation of the coating heights across the domain is a measure of surface roughness. The surface roughness initially increases rapidly but as degradation progresses, the rate of increase in surface roughness slows down. FIG. 4 shows the evolution of average surface roughness in a simulation performed by the system and method of the present disclosure. More specifically, FIG. 4, with reference to FIGS. 1 through 3, depicts evolution of surface roughness with one or more degradation events, in accordance with an embodiment of the present disclosure. A Monte Carlo simulation(s) provide with a three-dimensional topography of the clearcoat from which the average coating thickness and a measure of surface roughness can be obtained. The 2-dimensional surface roughness effects are presented in the surface plot as depicted in FIG. 5. More specifically, FIG. 5, with reference to FIGS. 1 through 4, depicts clearcoat surface roughness topography due to weathering, in accordance with an embodiment of the present disclosure.

Once positions and directionality of the microcrack seeds are obtained from the above FIGS (e.g., refer FIGS. 3 through 7), this knowledge of stress distribution can be used to determine a rate at which crack grows, statistical distribution of deviations in crack directionality as well as the starting points for active crack tips. The rate of occurrence of crack branching as well as the distribution of angles for branching can be obtained from the simulations (e.g., refer FIGS. 3 through 5) performed by the method and system of the present disclosure. The system and method of the present disclosure have considered a 5000x5000 lattice to represent the surface of the paint and microcrack seeds randomly distributed across it. The lengths of the seed cracks were taken to be 15 units each. Both ends of the seeds were considered as active crack tips, from which a crack line can propagate. The propagation of the crack lines from the seeds was implemented as follows. The crack line is allowed to propagate by a maximum of 5 units in the initial direction before its directionality is changed. Referring to steps of FIG. 2, at step 204 of the method of the present disclosure, the one or more hardware processors 104 determine one or more crack channel paths, one or more crack branching regions, and one or more crack delamination outputs associated with the coating material based on the plurality of inputs. The one or more crack channel paths comprise, but are not limited to, (i) one or more positions associated with one or more active crack tips, (ii) a statistical distribution of one or more crack deviations, and (iii) a crack growth rate as mentioned above. The one or more crack channel paths are determined based on one or more crack tips identified using (i) the one or more active crack tips, (ii) the statistical distribution of the one or more crack deviations, (iii) the crack growth rate, and (iv) the one or more crack branching regions, and (v) a vicinity of the one or more crack tips with reference to one or more edges and one or more crack lines (e.g., how close of far is a crack tip from edge(s) and crack line). In an example embodiment, the crack growth rate could be 5 straight reduced length units per unit time for a total simulation system surface size of 5000X5000 lattice grid units.

The one or more crack branching regions comprise but are not limited to, a rate of crack branching occurrence, and a statistical distribution of one or more angles of crack branching. The one or more crack branching regions are identified based on a comparison of a deflection of one or more angles of the crack branching with a pre-defined angle. For instance, the crack tip deflection angle can range typically anywhere between 'x' radian and 'y' radian wherein the pre-defined angle could be say z radian (e.g., z can be a value say 0 to 1 radian). It is to be understood by a person having ordinary skill in the art or person skilled in the art that such examples of the deflection of one or more angles of the crack branching and the pre-defined angle shall not be construed as limiting the scope of the present disclosure. In other words, depending upon the coating material (e.g., say other than paints) and experiments and simulations being performed by the method and system of the present disclosure, value of the deflection of one or more angles of the crack branching and the pre-defined angle may vary. Such variation of the pre-defined angle may either be pre-determined and configured in the system 100 or dynamically determined during the simulation and experiments being performed therein.

The one or more crack delamination outputs comprise but are not limited to, at least one of (i) a statistical distribution of stress across the coating material, (ii) a delaminated profile indicative of a shape and a curvature of the coating material when delaminated from the substrate, (iii) speed and time of a delamination associated with the coating material, and (iv) one or more boundary conditions of at least one of a stress and a strain in the coating material.

The above step 204 is better understood by way of following description:

Stress can develop in the paint (or films or paint) due to various reasons such as evaporation of solvents, variation of temperature (thermal stress), etc. Cracks begin to develop under the effect of these stresses. The distribution of these stresses across the paint surface is uneven due to the surface roughness which results in the crack taking a stochastic zig-zag path across the surface. Here, the method implemented an approach to model progression of cracking events across the surface using a statistical model and validate the results by comparing instances of paint cracking from real life.

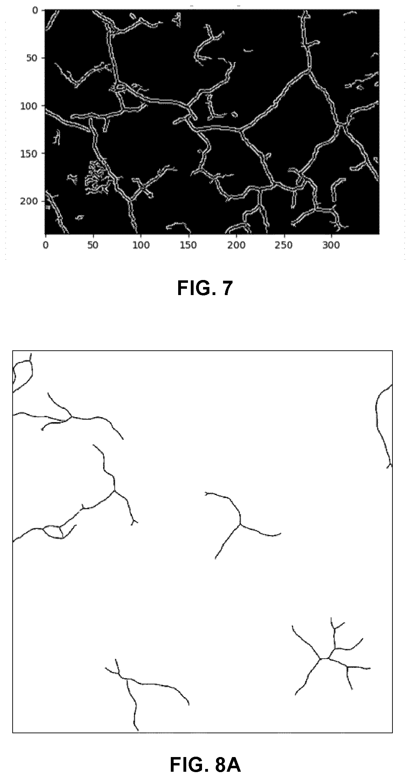

FIG. 6 shows a real instance of paint cracking. More specifically, FIG. 6, with reference to FIGS. 1 through 5, depicts a real instance of cracking of the coating material (e.g., paint), in accordance with an embodiment of the present disclosure. The crack lines in FIG. 6 have been traced using different image crack tracing techniques (as known in the art) for better visualization. The cracks lines after being traced by Canny Edge Detection using OpenCV package as known in the art has been shown in FIG. 7. More specifically, FIG. 7, with reference to FIGS. 1 through 6, depicts one or more crack lines extracted from the coating material (e.g., paint), in accordance with an embodiment of the present disclosure.

It can be observed from FIG. 7 that the crack paths formed on paint surface are not in straight lines as those show deflection from the original direction of propagation, repeatedly. These angles of deflection are not very large, but they have no fixed value. Another important feature of the cracks is their or self-similar, nature from various enlargements. The crack lines branch into two (like the letter 'Y') at almost right angles to each other, repeatedly but at irregular intervals. The system and method have implemented a stochastic approach to model crack propagation in the coating material such as paints. As mentioned in the crack propagation, the statistical distribution of deviations in crack directionality is the most important criteria to obtain the crack channel paths on the paint surface. In the case study as observed by the system and method of the present disclosure, a normal distribution of the deviations was finalized in crack directionality with zero mean and standard deviation value as 0.2, as these deviation angles are usually small. The probability distribution function is shown in equation (1) (the angle is in radians).

$$q(\Delta\theta) = \exp\left(\frac{-0.5\,\Delta\theta^2}{0.04}\right) \qquad (1)$$

Where, $\Delta\theta$ is the angle of deviation in crack directionality and $q$ is the probability of the event of the crack directionality deviating by $\Delta\theta$.

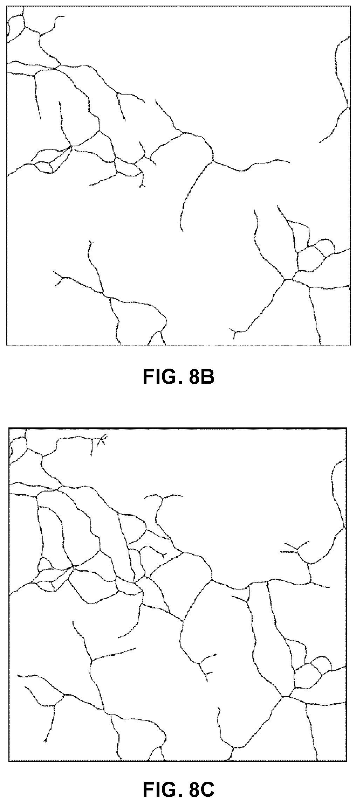

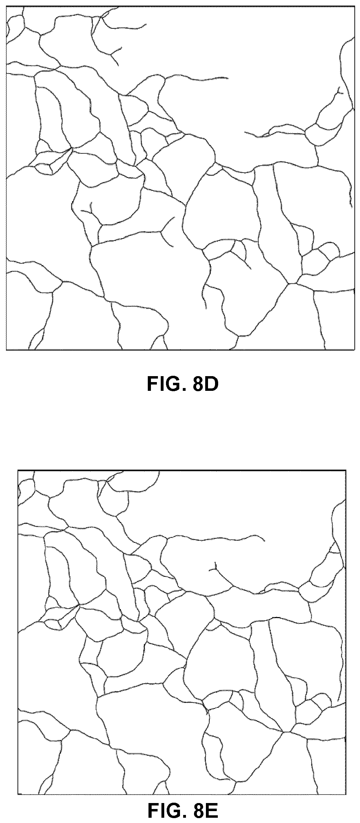

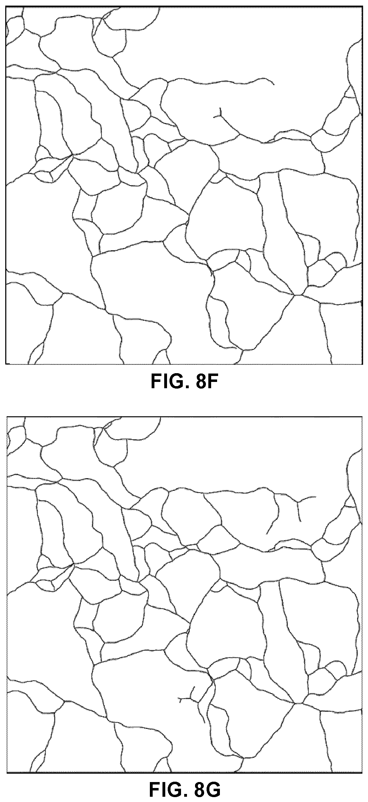

The change in crack directionality is sampled from the probability distribution function $q$, shown in equation (1). A crack line is terminated (by deactivating the crack tip) if it comes in the immediate vicinity of another crack line or edge of the lattice. In this case study, a radius of 6 units was defined as the region of immediate vicinity for a crack line or lattice edge. This entire process of crack propagation in the initial direction followed by change in directionality (and possible deactivation of crack tip) - is considered as one step. A record of all active crack tips and their directionalities was maintained and updated at the end of every step. In a single step, all active crack tips are propagated according to their individual directionalities. Once a crack line is propagated at a step, it is assigned an age variable to maintain record of its time of generation. A single simulation was run for 16,000 steps or more here by the system and method of the present disclosure. Multiple simulations from different initial configurations were run. The total cracked path of the system was obtained from these simulations along with spatial coordinates of all the cracked regions with their age variables. These simulations have been captured every 2,000 steps and are depicted in FIGS. 8A through 8G. More specifically, FIGS. 8A through 8G, with reference to FIGS. 1 through 7, depicts simulation results for crack propagation (e.g., also referred as one or more crack channel paths, one or more crack branching regions, and one or more crack delamination outputs), in accordance with an embodiment of the present disclosure. FIG. 8A, with reference to FIGS. 1 through 7, depicts a simulation result for crack propagation after 2,000 steps, in accordance with an embodiment of the present disclosure. FIG. 8B, with reference to FIGS. 1 through 8A, depicts a simulation result for crack propagation after 4,000 steps, in accordance with an embodiment of the present disclosure. FIG. 8C, with reference to FIGS. 1 through 8B, depicts a simulation result for crack propagation after 6,000 steps, in accordance with an embodiment of the present disclosure. FIG. 8D, with reference to FIGS. 1 through 8C, depicts a simulation result for crack propagation after 8,000 steps, in accordance with an embodiment of the present disclosure. FIG. 8E, with reference to FIGS. 1 through 8D, depicts a simulation result for crack propagation after 10,000 steps, in accordance with an embodiment of the present disclosure. FIG. 8F, with reference to FIGS. 1 through 8E, depicts a simulation result for crack propagation after 12,000 steps, in accordance with an embodiment of the present disclosure. FIG. 8G, with reference to FIGS. 1 through 8F, depicts a simulation result for crack propagation after 16,000 steps, in accordance with an embodiment of the present disclosure.

To get an accurate representation of propagation of cracks, crack branching events were incorporated in the simulations performed by the system and method of the present disclosure. The branching events are rare, and they occur especially when the deflection in crack directionality is high. Hence, the following condition, given in equation (2) was used for an active crack branching event.

$$\Delta\theta > 2.5\sigma \qquad (2)$$

Where $\Delta\theta$ is the crack deviation angle and $\sigma$ is the standard deviation of the distribution of crack deviations as shown in equation (1). After the condition in equation (2) is satisfied, two new crack tips originate from the older crack tip at right angles to each other, with crack deviating angles of +45° and -45° with respect to the past crack tip direction. Thus, from a single crack tip, two new active crack tips were generated. The branching adds extra active crack tips to the simulation, whereas the older crack tip is deactivated by the system 100 of FIG. 1 in the simulation.

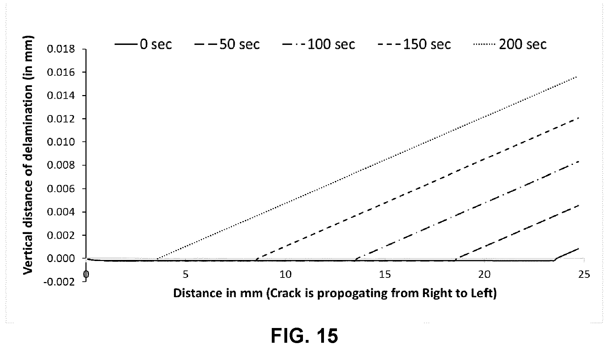

Referring to the steps of FIG. 2, at step 206 of the method of the present disclosure, the one or more hardware processors 104 generate a topography structure of the coating material based on the one or more crack channel paths, the one or more crack branching regions, and the one or more crack delamination outputs. For instance, FIG. 15 depicts topography structure of the coating material that is generated based on the one or more crack delamination outputs. More specifically, FIG. 15 depicts the topography structure of the coating material for the delaminated profile. It is to be understood by a person having ordinary skill in the art or person skilled in the art that the topography structure can be or is generated by the system 100 based on the one or more crack channel paths, and the one or more crack branching regions as well. Such example of topography structure with depiction of the one or more crack delamination outputs (also referred as delaminated profile and interchangeably used herein) depicted in FIG. 15 shall not be construed as limiting the scope of the present disclosure. Various analyses were performed by the system and method of the present disclosure to generate the topography structure of the coating material. When paint/coating is exposed to atmosphere, it experiences an induced tensile or compressive stress due to thermal stress/strain and various weathering factors. Due to this tensile stress in the coating, it leads to paint failure such as surface crack and delamination. In this case study described by the system and method of the present disclosure, delamination of paint due to induced tensile strain have been analysed using 2D Finite Element Method (FEM) based simulation. This induced strain in term induces the thermal/weathering related stress in the coating surface. There are various techniques which can be implemented such as contact debonding, Cohesive Zone Modelling (CZM) and Interfacial delamination using Virtual Crack Closure Techniques (VCCT). In this FEM simulation performed by the system and method of the present disclosure, VCCT based interface delamination approach was used to simulate paint delamination. The details of VCCT technique are as follows.

**Virtual Crack Closure Technique (VCCT):** The VCCT-based crack growth simulation was applied with various facts that delamination crack growth occurs along a predefined interface path with interface elements and quasi-static FEM analysis.

The critical energy-release rate criterion uses total energy-release rate ($G_T$) to predict when the film of the coating material will start to delaminate, and fracture will further propagate. A fracture criterion index, $f$ (refer equation (3)), determines propagation of interfacial delamination if it exceeds the value of 1. The total energy-release rate for 2D simulation is summation of the Mode $I(G_I)$ and Mode II $(G_{II})$ energy-release rates.

$$f = \frac{G_T}{G_T^C} \qquad (3)$$

Where, $G_T^C$ is the critical energy release rate which defines the resistance against interfacial delamination.

**FEM simulation:** Details of FEM geometry are as under:

*Delamination geometry:*

There are three components in the FEM model of Delamination

    1. Substrate
    2. Coating/Paint Film

3. Interface of Coating and Paint

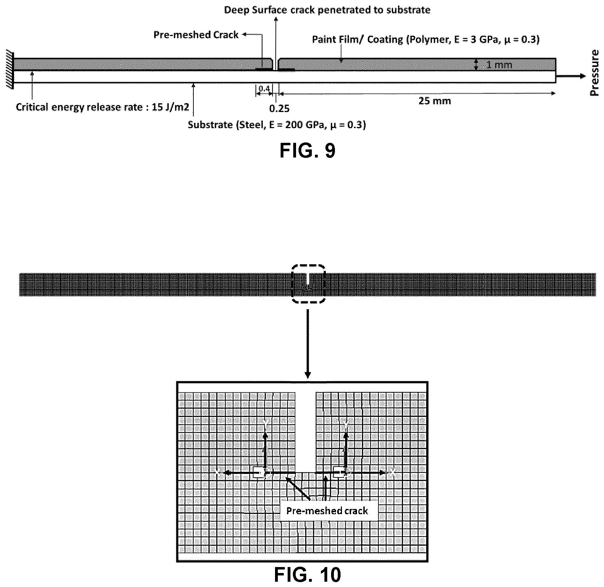

For sake of simplicity and symmetricity, 2D Model of delamination has been selected as shown in FIG. 9. More specifically, FIG. 9, with reference to FIGS. 8A through 8G, depicts delamination finite element method (FEM) model dimensions and boundary conditions (serving as delamination outputs), in accordance with an embodiment of the present disclosure. Notch has been created at centre of the coating film as shown in FIG. 9 which represents a deep surface crack reached at the coating-substrate interface due to weathering damage. To implement VCCT technique, pre-meshed crack needs to be assigned as shown in FIG. 10 with two tiny dark black lines. More specifically, FIG. 10, with reference to FIGS. 1 through 9, depicts meshing of a model and a pre-meshed crack, in accordance with an embodiment of the present disclosure. To identify the direction of crack propagation, crack tip and the coordinates are also required to be assigned as shown in FIG. 10, while the dotted circle (or broken line circle like depiction) in FIG. 10 indicates the crack tip of both left and right pre-meshed crack. Y coordinates are normal to crack growth direction and X coordinates are along the path of crack/delamination growth.

*Material Input:*

Material Property for substrate and coating film are described in Table 1 as follows. More specifically, Table 1 illustrates substrate property of components for FEM simulation:

Table 1

| Components | Material | Yield Strength (MPa) | Poisson Ratio ($\mu$) | Elastic Modulus (GPa) |
|---|---|---|---|---|
| Substrate | Steel | 200 | 0.3 | 210 |
| Coating | Acrylic Polyurethane | 30 | 0.3 | 3 |

Interfacial strength can be identified based on the fracture criterion is considered. In VCCT, Critical energy release rate has been considered as fracture criterion for delamination. Critical energy release rate ( $G_T^C$ ) for interface has been taken as 15 J/m$^2$. *Details of Mesh:* Details of elements, mesh size and number of elements used to mesh the 2D model are shown in Table 2. More specifically, Table 2 illustrates details of elements for FEM simulation:

Table 2

| | |
|---|---|
| Element used | PLANE182 (2D) |
| Mesh size | 0.1 mm |
| No of elements used | 10,185 |

Meshing Technique: Node matching technique has been used to share nodes of substrate and coating at interface

*Boundary conditions and loading condition:* There are two boundary conditions and one loading conditions have been used as follows:

*Boundary conditions*

1. Fixed Support: As shown in FIG. 9, fixed support has been applied to the left side of the geometry to restrict the sliding, rotational and translational motions.

2. Vertical Displacement of the geometry has been restricted by applying vertical displacement constraint to the bottom face of substrate to avoid the buckling of substrate or coating film.

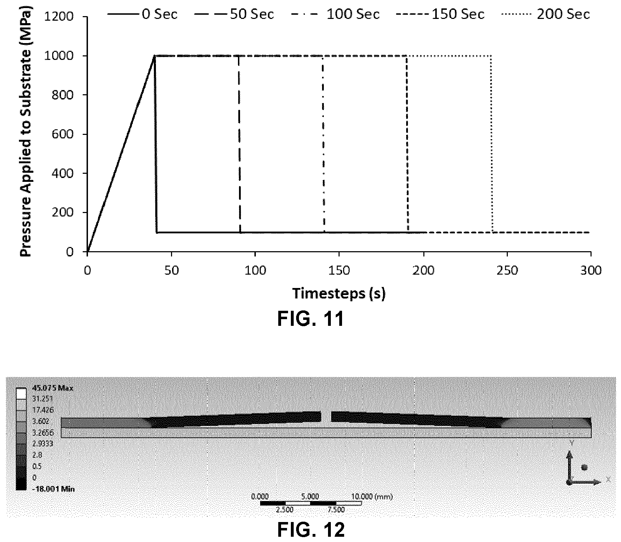

*Loading conditions: Applied Pressure to the substrate:* To mimic the induced tensile stress/ strain in the coating (due to Weathering), pulling pressure to the substrate to the right end side is applied as mentioned in FIG. 9. The variations of pressure conditions with different time step sequence and different holding time are explained in FIG. 11. More specifically, FIG. 11, with reference to FIGS. 1 through 10, depicts applied pressure conditions at a substrate, in accordance with an embodiment of the present disclosure. In FIG. 11, pressure condition for 5 simulations have been shown where X axis shows time steps for each simulation and Y axis holds value of applied pressure in MPa. Here pressure was applied in such a way that the holding time at 1000 MPa pressure was varied from 0 to 200-time units with 50 units of increments. It has been found that to get final stabilized delaminated profile at each timestep, it must be relaxed to a normal pressurized condition where the delamination does not propagate any further. Hence to get the final stabilized delaminated profile, pressure has been applied as shown in FIG. 11.

**FEM Delamination output analysis**

*Induced normal stress ($\sigma_x$):* The distribution of normal stress ($\sigma_x$) in the coating when substrate is under pulling condition can be observed as mentioned in the FIG. 12. More specifically, FIG. 12, with reference to FIGS. 1 through 11, depicts a distribution of Induced normal ($\sigma_x$) in the coating material, in accordance with an embodiment of the present disclosure. FIG. 12 shows that the delamination just crossed half the way, the distribution of normal tensile stress (+ $\sigma_x$) can be observed at the crack front. The region which are delaminated experience lesser amount of normal tensile stress (+ $\sigma_x$) compared to the region which are yet to delaminate.

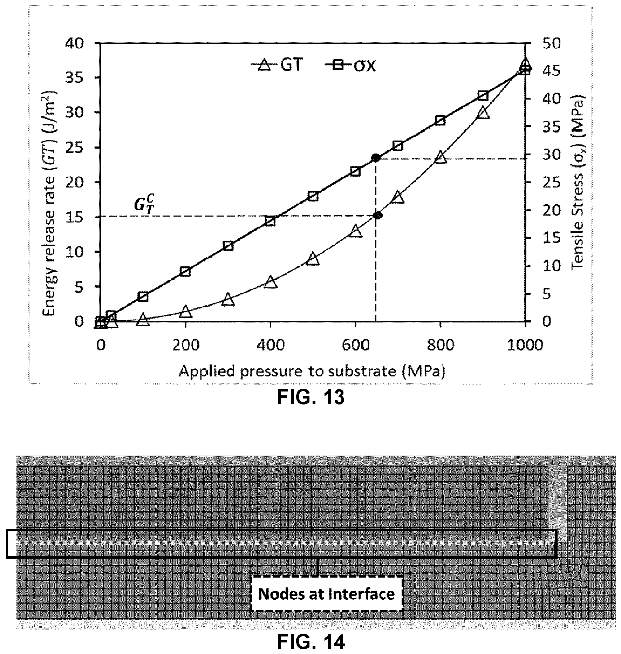

*Variation in critical energy release rate with increment in applied pressure:* As explained, VCCT technique has energy release rate as the fracture criterion. Hence to find the critical normal stress ($\sigma_x$) for delamination, the increment in total energy release rate has also been recorded along with max normal stress ($\sigma_x$) as shown in FIG. 13. FIG. 13, with reference to FIGS. 1 through 12, depicts a graphical representation illustrating a variation in energy release rate and normal stress with increment in applied pressure, in accordance with an embodiment of the present disclosure. It can be seen from FIG. 13 that the increment in maximum normal stress ($\sigma_x$) is linear and critical energy release rate is going to increase at a faster rate with applied pressure. So, when the value of energy release rate ($G_T$) exceeds to $G_T^C$, it will start to delaminate. As shown in FIG. 13, it has been observed that around 650 MPa, it crosses the critical value of energy release rate of 15J/m$^2$ ( $G_T^C$ ) and the value of induced normal tensile stress would be around 30 MPa.

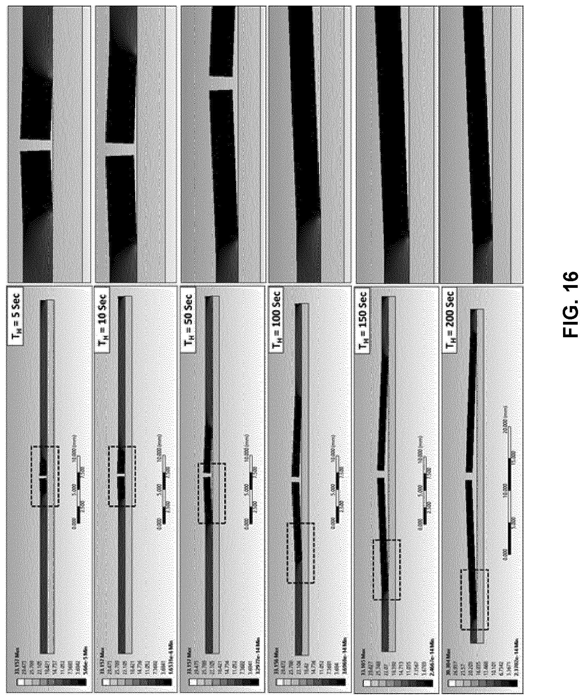

*Delaminated profile:* To find out delaminated profile, bottom nodes of paint/coating film at interface have been selected as shown in FIG. 14. More specifically, FIG. 14, with reference to FIGS. 1 through 13, depicts nodes of a coating material selected for extracting delaminated profile, in accordance with an embodiment of the present disclosure. The vertical displacement at these nodes have been recorded at different time steps as shown in FIG. 15. More specifically, FIG. 15, with reference to FIGS. 1 through 14, depicts a graphical representation illustrating a delaminated profile with different holding time (0-200 Sec), in accordance with an embodiment of the present disclosure. The increasing propagation of delamination under the applied pressure can be seen in FIG. 15 for 0 to 200 units of holding time. Y axis shows the vertical displacement of selected nodes at different pressure holding times and X axis shows the position of nodes from left to right in mm. It can be easily seen that the delaminated portion of the coating profile is coming almost linear with various degrees of delamination. To get more insight about the delamination profile, the delaminated profile of simulation with von-Mises stress distribution have been captured for various holding time i.e., 5, 10, 50, 100, 150 and 200 units as shown in FIG. 16. More specifically, FIG. 16, with reference to FIGS. 1 through 15, depicts delamination growth and Von mises stress distribution at different holding time, in accordance with an embodiment of the present disclosure. The enlarged view of delaminated crack front has been indicated right side to the figure for more clarity. It can be noted that von-Mises stress is maximum at crack front and the value of maximum von-Mises stress is around 30 MPa and the delaminated profile is coming almost linear as explained earlier. Therefore, the above results obtained from the 2-D simulations of delamination are utilized to calculate the 3-D surface topography of the cracked and delaminated coating surface.

Referring to steps of FIG. 2, at step 208 of the method of the present disclosure, the one or more hardware processors 104 simulate the topography structure of the coating material to obtain a simulated topography output comprising an analysis report of the coating material. the analysis report of the coating material comprises one or more of (i) a degree of damage of the coating material due to weathering, (ii) a remaining useful life (RUL) of the coating material, (ii) an intermediate stage and one or more past stages of one or more physical properties of the coating material. In FIGS. 16 through 18, simulations show the final maximum amount of surface damage that a paint coated surface can undergo. However, for all other intermediate stages of weathering related damage, the surface crack patterns are calculated for remaining useful life as shown in FIGS. 8A through 8G. In these intermediate stages of surface crack damages, the FIGS. 8A through 8G show the RULs of 87.5%, 75%, 62.5%, 50%, 37.5%, 25% and 0% approximately, respectively. Here the previous results obtained from the 2-D simulations of delamination are utilized to calculate the 3-D surface topography of the cracked and delaminated coating surface. The weathering and aging effects linearly delaminates the cracked portion of coating with time. This happens because the debonding energy falls below the critical energy release rate at the crack and coating boundary because of weathering.

At first the whole simulation space of 5000x5000 grid points were binned into a coarser grid of 200x200 points. For each grid point the nearby microcracks were identified, those which has been subjected to more than 1500 units of weathering time. Cracked regions with age more than 1500 units of weathering time can propagate for extra delamination at the nearby region.

The height of the delaminated profile of all simulation points is calculated by the following equations (4) & (5):

$$Age = Wt_{time} - 1500 \qquad (4)$$

$$delam = Max \left\{ \left( \frac{Age \times 100}{1000} \right) \times \left( 1 - \frac{dist}{Age/2} \right) \right\} \qquad (5)$$

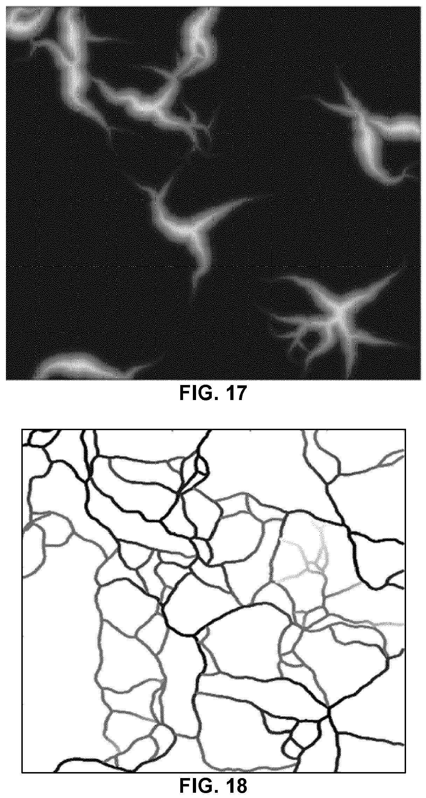

Where, $Wt_{time}$ is the maximum weathering time of any point near the vicinity of cracked regions, $Age$ is the time responsible for delamination more than the weathering time of 1500, $dist$ is the distance of the concerned grid point with respect to all possible nearest cracked regions, $delam$ is the extent of total delamination of any point. This $delam$ value is finally calculated from the maximum value of all possible degree of delamination coming from all neighbouring cracks present in the simulation performed by the system and method of the present disclosure. The map of the computed macro-scale tomography (also referred as simulated topography output) is presented in FIG. 17, where the lighter portions are the locations of increasing degree of delamination. More specifically, FIG. 17, with reference to FIGS. 1 through 16, depicts a delamination topography map, in accordance with an embodiment of the present disclosure. The crack paths as simulated by the method of the present disclosure is shown in FIG. 18. More specifically, FIG. 18, with reference to FIGS. 1 through 17, depicts simulated crack lines comprised in the simulated topography output, in accordance with an embodiment of the present disclosure. Line property (e.g., property include but are not limited to, colours, and the like) become increasingly darker with age of the crack line portions. The darker portions of the crack lines are the ones existing for longer simulation times after being created. The property (e.g., property include but are not limited to, colours (or color), and the like) of the simulated cracked lines in FIG. 18 vary continuously to lighter shades as those propagate along with time. It is to be understood by a person having ordinary skill in the art or person skilled in the art that the line property such as colour can be visualized in the simulated image outputted by the system and method of the present disclosure. However, only B&W (or grayscale) image outputs are depicted in the FIGS.

The simulated topography output of the system and method of the present disclosure was compared with a crack morphology of real by calculating their fractal dimensions (FD) using the box counting method. Additionally, the effect of severe delamination with cracked portions in the real image was compared with the delamination topography from the simulated images. The crack lines from the images have been traced using different tracing techniques viz, thresholding, range selection, canny edge detection in OpenCV package algorithms using computer vision (CV) based applications.

In FIG. 6 the real-life image of a cracked and damaged paint is shown, whereas in FIG. 7 the CV extracted crack lines are highlighted. FDs were also calculated from some other real-life cracked images and the average value of FD came out to be 1.33. Whereas the average FD calculated from various simulated cracked images after 16000 timesteps was 1.24, which is a close match with reality.

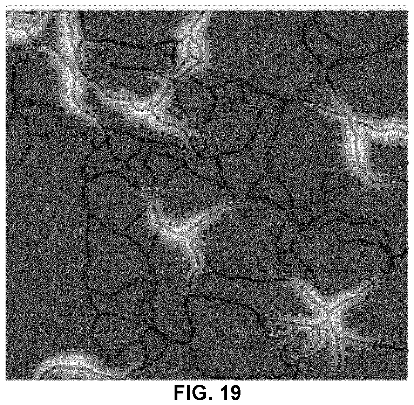

The above simulated topography output can be compared with their real-life counterpart image of a damaged/degraded paint subj ected to a combined effect of cracking and delamination. For this purpose, the map showing delamination topography (FIG. 17) is superimposed with the simulated crack propagation images (FIG. 18). The superimposed simulated image containing the effects of cracking and delamination is shown in FIG. 19. More specifically, FIG. 19, with reference to FIGS. 1 through 18, depicts a superimposed topography map of both delamination and cracking, in accordance with an embodiment of the present disclosure.

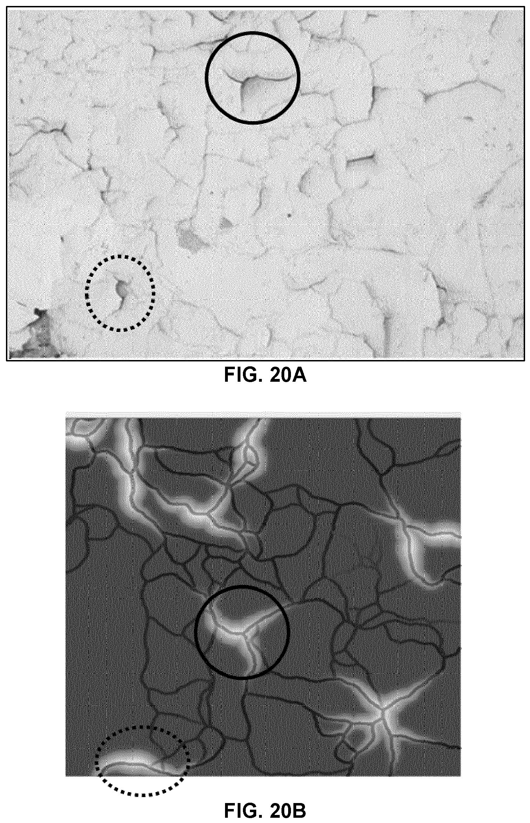

This simulated final topography was again compared and validated with some real-life images for checking the morphologies of delaminated regions and deeper cracks. This validation is shown in FIGS. 20A-20B. More specifically, FIGS. 20A-20B, with reference to FIGS. 1 through 19, depict a comparison of real topography due to combined effect of delamination and cracking with that of the simulated topography output of step 208, in accordance with an embodiment of the present disclosure. FIG. 20A shows a real damaged paint and FIG. 20B is a simulated output. In FIGS. 20A-20B, similar delamination morphologies from real and simulated outputs are highlighted by continuous and dotted circles.

As mentioned earlier, crack propagation of the coating material is modelled as a probabilistic system (e.g., system of the present disclosure) by using statistical distribution of angles of deviation of the crack channel paths. Crack branching is implemented depending on the angle of deviation of the crack. A counter (comprised in memory of the system) has been implemented by the system of the present disclosure to keep record of crack age. Delamination profile has been determined using one or more simulation techniques (e.g., virtual crack closure technique (VCCT) based finite element modelling (FEM) techniques). The failure criterion is used for delamination is the critical fracture energy release rate of interface debonding. Time series-based FEM data and delamination profile have been combined with Monte Carlo crack propagation technique and the final coating surface topography (e.g., paint surface topography) has been generated (e.g., also referred as simulated topography output). The method of the present disclosure improves prediction of the properties of the coating material unlike conventional approaches which are first principle-based approaches and have been traditionally used to model weathering phenomena in limited capability only (such as surface micro-roughness). The crack propagation determination in the present disclosure is based on the possible statistical distribution of the angles of deviation in crack channel paths in place of first principle-based stress analysis like molecular dynamics, etc. Similarly, the delamination approach is based on the fact that older cracks are statistically more prone to delamination. Combination of the combined and interlinked effects of crack propagation, crack branching, and cracking and weathering induced delamination enables performing simulation by the system to generate a simulated topography output.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:

obtaining, via one or more hardware processors, a plurality of inputs pertaining to a coating material being applied on a substrate (202);

determining, via the one or more hardware processors, one or more crack channel paths, one or more crack branching regions, and one or more crack delamination outputs associated with the coating material based on the plurality of inputs (204);

generating, via the one or more hardware processors, a topography structure of the coating material based on the one or more crack channel paths, the one or more crack branching regions, and the one or more crack delamination outputs (206); and

simulating, via the one or more hardware processors, the topography structure of the coating material to obtain a simulated topography output comprising an analysis report of the coating material (208).

2. The processor implemented method as claimed in claim 1, wherein the plurality of inputs comprises one or more of (i) one or more positions and one or more line directions of one or more microcrack seeds in the coating material, (ii) a weathering intensity, (iii) a dynamic material cracking and delamination energy, and (iv) one or more stress types at one or more parts of the coating material, wherein the one or more crack channel paths comprise (i) one or more positions associated with one or more active crack tips, (ii) a statistical distribution of one or more crack deviations, and (iii) a crack growth rate, wherein the one or more crack branching regions comprise a rate of crack branching occurrence, and a statistical distribution of one or more angles of crack branching, and wherein the one or more crack delamination outputs comprise at least one of (i) a statistical distribution of stress across the coating material, (ii) a delaminated profile indicative of a shape and a curvature of the coating material when delaminated from the substrate, (iii) speed and time of a delamination associated with the coating material, and (iv) one or more boundary conditions of at least one of a stress and a strain in the coating material.

3. The processor implemented method as claimed in claim 2, wherein the one or more crack channel paths are determined based on one or more crack tips identified using (i) the one or more active crack tips, (ii) the statistical distribution of the one or more crack deviations, (iii) the crack growth rate, and (iv) the one or more crack branching regions, and (v) a vicinity of the one or more crack tips with reference to one or more edges and one or more crack lines.

4. The processor implemented method as claimed in claim 2, wherein the one or more crack branching regions are identified based on a comparison of a deflection of one or more angles of the crack branching with a pre-defined angle.

5. The processor implemented method as claimed in claim 1, wherein the analysis report of the coating material comprises one or more of (i) a degree of damage of the coating material due to weathering, (ii) a remaining useful life (RUL) of the coating material, (ii) an intermediate stage and one or more past stages of one or more physical properties of the coating material.

6. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

obtain a plurality of inputs pertaining to a coating material being applied on a substrate;
determine one or more crack channel paths, one or more crack branching regions, and one or more crack delamination outputs associated with the coating material based on the plurality of inputs;
generate a topography structure of the coating material based on the one or more crack channel paths, the one or more crack branching regions, and the one or more crack delamination outputs; and
simulate the topography structure of the coating material to obtain a simulated topography output comprising an analysis report of the coating material.

7. The system as claimed in claim 6, wherein the plurality of inputs comprises one or more of (i) one or more positions and one or more line directions of one or more microcrack seeds in the coating material, (ii) a weathering intensity, (iii) a dynamic material cracking and delamination energy, and (iv) one or more stress types at one or more parts of the coating material, wherein the one or more crack channel paths comprise (i) one or more positions associated with one or more active crack tips, (ii) a statistical distribution of one or more crack deviations, and (iii) a crack growth rate, wherein the one or more crack branching regions comprise a rate of crack branching occurrence, and a statistical distribution of one or more angles of crack branching, and wherein the one or more crack delamination outputs comprise at least one of (i) a statistical distribution of stress across the coating material, (ii) a delaminated profile indicative of a shape and a curvature of the coating material when delaminated from the substrate, (iii) speed and time of a delamination associated with the coating material, and (iv) one or more boundary conditions of at least one of a stress and a strain in the coating material.

8. The system as claimed in claim 7, wherein the one or more crack channel paths are determined based on one or more crack tips identified using (i) the one or more active crack tips, (ii) the statistical distribution of the one or more crack deviations, (iii) the crack growth rate, and (iv) the one or more crack branching regions, and (v) a vicinity of the one or more crack tips with reference to one or more edges and one or more crack lines.

9. The system as claimed in claim 7, wherein the one or more crack branching regions are identified based on a comparison of a deflection of one or more angles of the crack branching with a pre-defined angle.

10. The system as claimed in claim 6, wherein the analysis report of the coating material comprises one or more of (i) a degree of damage of the coating material due to weathering, (ii) a remaining useful life (RUL) of the coating material, (ii) an intermediate stage and one or more past stages of one or more physical properties of the coating material.

11. One or more non-transitory machine-readable information storage mediums comprising one or more instructions which when executed by one or more hardware processors cause:

    obtaining a plurality of inputs pertaining to a coating material being applied on a substrate;
    determining one or more crack channel paths, one or more crack branching regions, and one or more crack delamination outputs associated with the coating material based on the plurality of inputs;
    generating a topography structure of the coating material based on the one or more crack channel paths, the one or more crack branching regions, and the one or more crack delamination outputs; and
    simulating the topography structure of the coating material to obtain a simulated topography output comprising an analysis report of the coating material.

12. The one or more non-transitory machine-readable information storage mediums as claimed in claim 11, wherein the plurality of inputs comprises one or more of (i) one or more positions and one or more line directions of one or more microcrack seeds in the coating material, (ii) a weathering intensity, (iii) a dynamic material cracking and delamination energy, and (iv) one or more stress types at one or more parts of the coating material, wherein the one or more crack channel paths comprise (i) one or more positions associated with one or more active crack tips, (ii) a statistical distribution of one or more crack deviations, and (iii) a crack growth rate, wherein the one or more crack branching regions comprise a rate of crack branching occurrence, and a statistical distribution of one or more angles of crack branching, and wherein the one or more crack delamination outputs comprise at least one of (i) a statistical distribution of stress across the coating material, (ii) a delaminated profile indicative of a shape and a curvature of the coating material when delaminated from the substrate, (iii) speed and time of a delamination associated with the coating material, and (iv) one or more boundary conditions of at least one of a stress and a strain in the coating material.

13. The one or more non-transitory machine-readable information storage mediums as claimed in claim 12, wherein the one or more crack channel paths are determined based on one or more crack tips identified using (i) the one or more active crack tips, (ii) the statistical distribution of the one or more crack deviations, (iii) the crack growth rate, and (iv) the one or more crack branching regions, and (v) a vicinity of the one or more crack tips with reference to one or more edges and one or more crack lines.

14. The one or more non-transitory machine-readable information storage mediums as claimed in claim 12, wherein the one or more crack branching regions are identified based on a comparison of a deflection of one or more angles of the crack branching with a pre-defined angle.

15. The one or more non-transitory machine-readable information storage mediums as claimed in claim 11, wherein the analysis report of the coating material comprises one or more of (i) a degree of damage of the coating material due to weathering, (ii) a remaining useful life (RUL) of the coating material, (ii) an intermediate stage and one or more past stages of one or more physical properties of the coating material.

SYSTEM
100

MEMORY
102

DATABASE
108

HARDWARE
PROCESSOR(S)
104

INTERFACE(S)
106

**FIG. 1**

```
┌─────────────────────────────────────────────────────┐
│  obtaining a plurality of inputs pertaining to a      │
│  coating material                                      │ ⌒ 202
│  being applied on a substrate                          │
└─────────────────────────────────────────────────────┘
                          │
                          ▼
┌─────────────────────────────────────────────────────┐
│  determining one or more crack channel paths, one     │
│  or more                                               │
│  crack branching regions, and one or more crack        │ ⌒ 204
│  delamination outputs associated with the coating      │
│  material                                              │
│  based on the plurality of inputs                      │
└─────────────────────────────────────────────────────┘
                          │
                          ▼
┌─────────────────────────────────────────────────────┐
│  generating a topography structure of the coating      │
│  material                                              │
│  based on the one or more crack channel paths, the     │ ⌒ 206
│  one or                                                │
│  more crack branching regions, and the one or more     │
│  crack                                                  │
│  delamination outputs                                  │
└─────────────────────────────────────────────────────┘
                          │
                          ▼
┌─────────────────────────────────────────────────────┐
│  simulating the topography structure of the coating    │
│  material to                                           │
│  obtain a simulated topography output comprising an    │ ⌒ 208
│  analysis                                              │
│  report of the coating material                        │
└─────────────────────────────────────────────────────┘
```

**FIG. 2**

**FIG. 3**

**FIG. 4**

FIG. 5

FIG. 6

**FIG. 7**

**FIG. 8A**

FIG. 8B

FIG. 8C

**FIG. 8D**

**FIG. 8E**

FIG. 8F

FIG. 8G

Deep Surface crack penetrated to substrate

Pre-meshed Crack ◄─

Paint Film/ Coating (Polymer, E = 3 GPa, μ = 0.3)

1 mm

Pressure

0.4

0.25

25 mm

Critical energy release rate : 15 J/m2

Substrate (Steel, E = 200 GPa, μ = 0.3)

**FIG. 9**

Pre-meshed crack

**FIG. 10**

FIG. 11

FIG. 12

FIG. 13

FIG. 14

FIG. 15

FIG. 16

FIG. 17

FIG. 18

FIG. 19

FIG. 20A

FIG. 20B

Europäisches
Patentamt

European
Patent Office

Office européen
des brevets

## EUROPEAN SEARCH REPORT

Application Number

EP 23 19 5768

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HINDERLITER BRIAN ET AL: "Monte carlo approach to estimating the photodegradation of polymer coatings", JOURNAL OF COATINGS TECHNOLOGY AND RESEARCH, vol. 2, no. 6, 1 April 2005 (2005-04-01), pages 483-491, XP093120985, US ISSN: 1547-0091, DOI: 10.1007/BF02733891 * abstract * * pg. 483, col. 2, par. 2 pg. 484, col. 2, par. 3-7 pg. 485, col. 1, par. 3-5 pg. 486, col. 1, par. 1, 4, 5 pg. 486, col. 2, par. 1 pg. 487, col. 1, par. 2, 4, 5 pg. 488, col. 1, par. 2 pg. 490, col. 2, par. 4 * * figures 1, 2 * * the whole document * | 1-15 | INV. G01M5/00 G06F30/23 ADD. G06F119/04 G06F111/08 G06F113/26 |

-----

-/--

TECHNICAL FIELDS
SEARCHED (IPC)

G01M
G06F

The present search report has been drawn up for all claims

| Place of search | Date of completion of the search | Examiner |
|---|---|---|
| Munich | 18 January 2024 | Brandiska, Pavlina |

EPO FORM 1503 03.82 (P04C01)

Europäisches
Patentamt

European
Patent Office

Office européen
des brevets

## EUROPEAN SEARCH REPORT

**Application Number**

**EP 23 19 5768**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Company Darr--Ford Motor: "Effect of Weathering on the Stress Distribution and Mechanical Performance of Automotive Paint Systems", , 1 October 1998 (1998-10-01), pages 141-149, XP093118549, Retrieved from the Internet: URL:https://link.springer.com/article/10.1007/BF02730084 [retrieved on 2024-01-11] * abstract * * pg. 142, col. 2, par. 2 pg. 143, section Modeling of Stresses in Multilayer Coatings pg. 143, col. 2, par. 2, 3 pg. 147, col. 1, par. 2 * * figures 1, 5-9 * * the whole document * | 1-15 | |
| X | BOSCO E ET AL: "Crack channelling mechanisms in brittle coating systems under moisture or temperature gradients", INTERNATIONAL JOURNAL OF FRACTURE, SPRINGER NETHERLANDS, DORDRECHT, vol. 225, no. 1, 29 June 2020 (2020-06-29) , pages 1-30, XP037214743, ISSN: 0376-9429, DOI: 10.1007/S10704-020-00461-3 [retrieved on 2020-06-29] * abstract * * pg. 3, par. 1 pg. 4, par. 2, 3 pg. 5, par. 2 * * figures 1, 3, 4, 9 * * section 4.1, 4.2.2 section 5.2 * * the whole document * | 1-15 | TECHNICAL FIELDS SEARCHED (IPC) |

-/--

The present search report has been drawn up for all claims

| Place of search | Date of completion of the search | Examiner |
|---|---|---|
| Munich | 18 January 2024 | Brandiska, Pavlina |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

**EP 23 19 5768**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GROTHE R ET AL: "Scanning Kelvin Probe Blister test measurements of adhesive delamination – Bridging the gap between experiment and theory", INTERNATIONAL JOURNAL OF ADHESION AND ADHESIVES, ELSEVIER, AMSTERDAM, NL, vol. 73, 12 November 2016 (2016-11-12), pages 8-15, XP029854962, ISSN: 0143-7496, DOI: 10.1016/J.IJADHADH.2016.11.006 * abstract * * section 2.2.4, 3.5 * * figures 3,12 * * the whole document * | 1-15 | |
| X | EUMELEN G J A M ET AL: "A computational model for chemo-mechanical degradation of historical oil paintings due to metal soap formation", JOURNAL OF THE MECHANICS AND PHYSICS OF SOLIDS, PERGAMON PRESS, OXFORD, GB, vol. 132, 19 August 2019 (2019-08-19), XP085825034, ISSN: 0022-5096, DOI: 10.1016/J.JMPS.2019.103683 [retrieved on 2019-08-19] * abstract * * figures 6,8 * * section 3.4 section 4, 5 * * the whole document * | 1-15 | TECHNICAL FIELDS SEARCHED (IPC) |

The present search report has been drawn up for all claims

| Place of search | Date of completion of the search | Examiner |
|---|---|---|
| Munich | 18 January 2024 | Brandiska, Pavlina |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221051300